# EUROPÄISCHE PATENTSCHRIFT

(11) **EP 3 622 168 B1**
(45) Veröffentlichungstag und Bekanntmachung des Hinweises auf die Patenterteilung: **29.10.2025**
(21) Anmeldenummer: 18720557.0
(22) Anmeldetag: 20.04.2018
(51) Int. Cl.: F02M 26/21, F02M 26/50, F02M 26/70, F16K 1/20, F16K 1/36

(54) **REGELVORRICHTUNG FÜR EINE VERBRENNUNGSKRAFTMASCHINE**
CONTROL DEVICE FOR INTERNAL COMBUSTION ENGINE
DISPOSITIF DE COMMANDE POUR MOTEUR À COMBUSTION INTERNE

(30) Priorität: 12.05.2017 DE 102017110324
(43) Veröffentlichungstag der Anmeldung: 18.03.2020
(73) Patentinhaber: Pierburg GmbH, 41460 Neuss (DE)
(72) Erfinder: PAFFRATH, Holger, 50259 Pulheim (DE)
(74) Vertreter: terpatent PartGmbB
(86) Internationale Anmeldenummer: PCT/EP2018/060173
(87) Internationale Veröffentlichungsnummer: WO 2018/206268

(56) Entgegenhaltungen:
- DE-A1- 102014 200 699
- DE-A1- 19 825 583
- DE-A1- 2 703 687
- DE-B1- 1 751 655
- DE-U1- 20 023 818
- DE-U1- 202017 104 329
- FR-A- 922 202
- JP-A- H09 264 203

## Beschreibung

Die vorliegende Erfindung betrifft eine Regelvorrichtung für eine Verbrennungskraftmaschine umfassend einen Abgasrückführkanal, einen Luftansaugkanal, in welchen der Abgasrückführkanal mündet, einen Ventilsitz, welcher an einer Mündung am Ende des Abgasrückführkanals ausgebildet ist, und einen Ventilteller, welcher mittels eines Aktors auf den Ventilsitz auflegbar ist, so dass die Mündung des Abgasrückführkanals verschließbar ist.

Derartige Regelvorrichtungen sind aus dem Stand der Technik bekannt und dienen zum Regeln des rückgeführten Abgases. Zur Reduzierung von Schadstoffen wird das Abgas der Verbrennungskraftmaschine durch Öffnen eines Regelkörpers über einen Abgasrückführkanal zurück zur Verbrennungskraftmaschine geleitet. Durch die erneute Verbrennung in der Verbrennungskraftmaschine wird die Stickoxid-Konzentration des rückgeführten Abgases reduziert, so dass der gesamte Schadstoffausstoß verringert wird.

Bei solchen Regelvorrichtungen ist es hinlänglich bekannt, dass sich in dem Luftansaugkanal Kondensat bilden kann, welches beispielsweise zu Beschädigungen am Verdichter führen kann.

Die DE 10 2014 200 699 A1 offenbart eine Regelvorrichtung für einer Verbrennungskraftmaschine. Die Regelvorrichtung weist eine Abgasrückführklappe auf, welche einen in einen Luftansaugkanal mündenden Abgasrückführkanal öffnet oder verschließt. Ein Bereich zwischen dem Luftansaugkanal und dem Abgasrückführkanal ist derart geformt, dass in dem Luftansaugkanal gebildetes Kondensat nach Abheben der Abgasrückführklappe von dem Ventilsitz in den Abgasrückführkanal abgeleitet werden kann.

Des Weiteren ist aus der DE 1 751 655 ein Abgasrückführventil bekannt, über welches Abgas in den Ansaugkanal eingeführt werden kann und welches einen sphärisch geformten Ventilkörper aufweist. Auch die DE 27 03 687 offenbart einen solchen Ventilkörper. Diese sind jedoch nicht geeignet, in der Ruhestellung des Ventils Kondensat in den Abgasrückführkanal abzuführen.

Zusätzlich ist aus der DE 198 25 583 A1 ein Abgasrückführventil bekannt, welches einen zur Ventilstange geneigten Ventilsitz aufweist, so dass zwischen dem Ventilsitz und dem Ventilkörper ein Spalt entsteht, über den Kondensat bei abgeschaltetem Motor abfließen soll. Das Ventil muss jedoch zum Verschluss des Abgasrückführkanals zur Ventilstange gekippt werden.

Bei den Regelvorrichtungen nach dem Stand der Technik, verschließt die Abgasrückführklappe in einer Ruhestellung den Abgasrückführkanal, so dass das sich nach dem Abstellen der Verbrennungskraftmaschine gebildete Kondensat nicht in den Abgasrückführkanal abfließen kann, sondern sich auf der Klappe sammelt. Bei niedrigen Temperaturen und längerer Standzeit der Verbrennungskraftmaschine kann das Kondenswasser im Bereich des Ventilsitzes gefrieren, so dass ein Öffnen der Klappe zu Beginn der Warmlaufphase nicht möglich ist. Die Klappe ist damit erst zu öffnen, wenn das Abgas das Eis am Regelkörper aufgetaut hat. Eine Reduktion des Schadstoffausstoßes ist damit nicht direkt nach dem Kaltstart möglich. Auch bei höheren Temperaturen kann sich beim Abschalten und somit Abkühlen des Verbrennungsmotors Kondensat bilden, welches bei Neustart des Verbrennungsmotors zum Verdichter gefördert würde und dort zu Schäden führen kann.

Um den hohen Anforderungen an die Abgaswerte gerecht zu werden, besteht zudem ein stetiges Interesse, die Emissionen weiter zu senken.

Die Aufgabe der vorliegenden Erfindung liegt somit darin, eine Regelvorrichtung für eine Verbrennungskraftmaschine zu schaffen, welche ein geringeres Risiko des Festfrierens der Regelvorrichtung aufweist, Schäden am Verdichter verhindert und mit welcher eine weitere Reduktion der Abgasemissionen möglich ist.

Diese Aufgabe wird durch eine Regelvorrichtung für eine Verbrennungskraftmaschine mit den Merkmalen des Anspruchs 1 gelöst.

Bei der erfindungsgemäßen Regelvorrichtung formt der Ventilsitz und/oder der Ventilteller eine zumindest einfach gekrümmte konkave Fläche aus. Bei einer einfach gekrümmten Fläche berührt jede Tangentialebene der Fläche diese längs einer ganzen Flächenkurve. Erfindungsgemäß umfasst eine zumindest einfach gekrümmte konkave Fläche auch eine doppelt gekrümmte konkave Fläche. Bei einer doppelt gekrümmten Fläche berührt dementsprechend jede Tangentialebene der Fläche diese lokal in genau einem Punkt. Vorzugsweise sind die Krümmungsrichtungen der doppelt gekrümmten Fläche orthogonal zueinander. Die konkave Ausbildung der Flächen liegt dabei zumindest in einer Ruhestellung der Regelvorrichtung vor und ist bestimmt in Bezug auf einem Zwischenbereich zwischen Ventilsitz und Ventilteller.

Bei Auflage des Ventiltellers auf dem Ventilsitz in der Ruhestellung, also ohne aktive Krafteinwirkung des Aktors, bildet sich zwischen Ventilteller und Ventilsitz somit zumindest ein Spalt, über welchen Kondensat nach Abstellen der Verbrennungskraftmaschine ablaufen kann. Dadurch wird das Risiko des Festfrierens deutlich reduziert. Die Regelvorrichtung ist somit direkt nach dem Kaltstart einsatzbereit. Dadurch ist eine Reduktion des Schadstoffausstoßes direkt nach dem Starten möglich, wodurch die Emissionen weiter gesenkt werden können. Zusätzlich wird das Kondensat, welches zum Abgaskanal abgeleitet wurde, beim Neustart durch das warme Abgas verdampft und somit nicht in flüssiger Form zum Verdichter geleitet, wodurch Schäden an diesem vermieden werden.

Damit die Regelvorrichtung während des Betriebes auch Stellungen einnehmen kann, bei welchen kein Abgas aus dem Abgasrückführkanal rückgeführt wird, ist der Ventilteller erfindungsgemäß elastisch ausgebildet. Der Ventilteller biegt sich dabei in einer Richtung entlang einer Abgasrückführkanalachse. Durch ein Verfahren der Regelvorrichtung in eine Schließstellung mittels einer aktiv eingebrachten Kraft des Aktors, biegt sich der Ventilteller derart, dass er sich an die Form des Ventilsitzes anpasst und auf diesem umlaufend dichtend aufliegt.

Zwischen den Stellungen, bei welchen der Ventilteller dichtend auf dem Ventilsitz aufliegt und bei welcher der Ventilteller den Ventilsitz gerade noch berührt, wird das Abgas lediglich durch die zwischen Ventilsitz und Ventilteller entstehenden Spalte zurückgeführt. Zwischen diesen Stellungen kann die rückgeführte Abgasmenge dadurch sehr genau geregelt werden, wodurch die rückgeführte Abgasmenge optimal auf die Reduzierung der Emissionen angepasst werden kann. Dadurch kann somit eine weitere Reduzierung der Emissionen erzielt werden.

In einer bevorzugten Ausführung der Erfindung verläuft eine Krümmung der einfach gekrümmten konkaven Fläche parallel zu einer Luftansaugkanal-Mittelachse. Die sich zwischen Ventilsitz und Ventilteller ergebenden Spalte liegen somit in einer Richtung die orthogonal zu einer Hauptströmungsrichtung des Luftansaugkanals ist. Anders ausgedrückt ist der Ventilsitz und/oder der Ventilteller zu einer parallelen Geraden der Luftansaugkanal-Mittelachse konkav gekrümmt ausgebildet ist, so dass in der Ruhestellung zwischen dem Ventilteller und dem Ventilsitz an Seiten orthogonal zur Luftansaugkanal-Mittelachse Spalte ausgebildet sind. Dadurch liegen die Spalte nicht in der Strömung des Luftansaugkanals, so dass eine Rückströmung von Luft aus dem Luftansaugkanal in den Abgasrückführkanal vermieden werden kann. Das rückgeführte Abgas kann somit leichter in den Luftansaugkanal eingeleitet werden.

In einer alternativen Ausführung der Erfindung verläuft eine Krümmung der einfach gekrümmten konkaven Fläche orthogonal zu einer Luftansaugkanal-Mittelachse. Anders ausgedrückt ist der Ventilsitz und/oder der Ventilteller zu einer Geraden, die orthogonal zur Luftansaugkanal-Mittelachse verläuft, konkav gekrümmt ausgebildet, so dass in der Ruhestellung Spalte zwischen dem Ventilteller und dem Ventilsitz in einer Hauptströmungsrichtung des Luftansaugkanals hintereinander liegen, wodurch das Kondensat, welches vom Verdichter zurückströmt auf kürzestem Weg zum Abgaskanal zurückgeführt wird.

In einer weiteren bevorzugten Ausführung der Erfindung formt die aufgespannte Ebene eine doppelt gekrümmte konkave Fläche aus. Bei einer doppelt gekrümmten Fläche berührt jede Tangentialebene der Fläche diese lokal in genau einem Punkt. Vorzugsweise sind die Krümmungsrichtungen der doppelt gekrümmten Fläche orthogonal zueinander. Durch die doppelt gekrümmte konkave Fläche kann die Spalt-Anzahl vergrößert werden, so dass das Kondensat noch effektiver abgeführt werden kann.

In einer bevorzugten Ausgestaltung ist der Ventilteller in dem Luftansaugkanal um eine Schwenkachse verschwenkbar angeordnet. Die Schwenkachse ist dabei orthogonal zu der Luftansaugkanal-Mittelachse angeordnet. Dadurch ist es möglich, beim Öffnen des Abgasrückführkanals, den Luftansaugkanal zu drosseln, wodurch die Druckdifferenz erhöht und somit der Abgasmassenstrom erhöht werden kann.

Alternativ ist der Ventilteller in dem Luftansaugkanal entlang einer Abgasrückführkanalachse beweglich angeordnet. Der Ventilteller wird somit in seiner axialen Richtung bewegt.

Vorteilhaft ist es, wenn der Ventilteller aus Blech gebildet ist. Blech ist ein günstiger Werkstoff, welcher die geforderte Elastizität aufweist und zudem leicht zu bearbeiten ist. Dadurch lässt sich die Regelvorrichtung wirtschaftlicher herstellen.

In einer bevorzugten Ausgestaltung ist die Regelvorrichtung federbelastet, so dass der Ventilteller in einer Ruhestellung der Regelvorrichtung, in der der Aktor nicht aktiviert ist, am Ventilsitz aufliegt, wobei eine Federkraft des Ventiltellers derart bemessen ist, dass in dieser Stellung zwischen Ventilteller und Ventilsitz wenigstens ein Spalt ausgeformt ist. Dadurch liegt in einer Ruhestellung der Regelvorrichtung keine dichtende Verbindung vor, so dass Kondensat über Spalte zwischen Ventilteller und Ventilsitz in den Abgasrückführkanal ablaufen kann. Ein Festfrieren der Regelvorrichtung wird somit vermieden.

Besonders vorteilhaft ist es, wenn in einer Schließstellung der Regelvorrichtung der Ventilteller entgegen der Federkraft durch den Aktor dichtend auf den Ventilsitz gepresst ist. Eine dichtende Stellung des Ventils ist somit nur möglich, wenn der Aktor aktiv den Ventilteller entgegen der Federkraft des Ventiltellers diesen auf den Ventilsitz presst. Dadurch wird sichergestellt, dass in einer Ruhestellung der Regelvorrichtung zwischen Ventilteller und Ventilsitz Spalte ausgebildet sind, so dass das Kondensat ablaufen kann und ein Festfrieren der Regelvorrichtung sowie Schäden am Verdichter vermieden werden.

Es wird somit eine Regelvorrichtung für eine Verbrennungskraftmaschine geschaffen, welche ein geringeres Risiko des Festfrierens der Regelvorrichtung aufweist. Zudem ist durch die Regelvorrichtung eine weitere Reduktion der Abgasemissionen möglich und es werden Schäden am Verdichter durch eine aktive Förderung flüssigen Wassers vermieden.

Weitere Einzelheiten und Vorteile der vorliegenden Erfindung ergeben sich aus der nachfolgenden Beschreibung der Ausführungsbeispiele in Verbindung mit den Zeichnungen. In diesen zeigen:
- Figur 1:: Regelvorrichtung für eine Verbrennungskraftmaschine in einer Ruhestellung nach einem ersten Ausführungsbeispiel der vorliegenden Erfindung,
- Figur 2:: Regelvorrichtung nach Figur 1 in einer geschlossenen Stellung,
- Figur 3:: Regelvorrichtung für eine Verbrennungskraftmaschine in einer Ruhestellung nach einem zweiten Ausführungsbeispiel der vorliegenden Erfindung, und
- Figur 4:: Regelvorrichtung nach Figur 3 in einer geschlossenen Stellung.

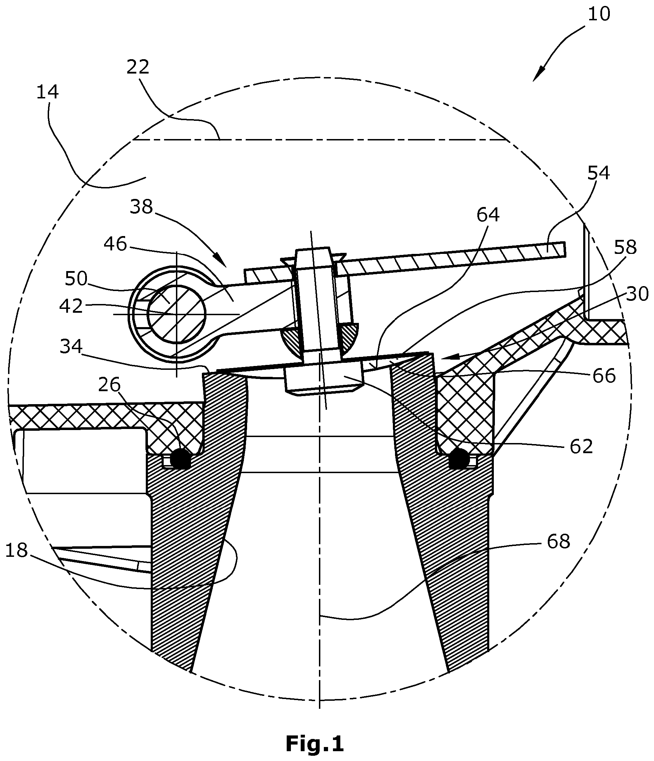

Die Figur 1 zeigt eine Regelvorrichtung 10 für eine Verbrennungskraftmaschine nach einem ersten Ausführungsbeispiel der vorliegenden Erfindung. Die Regelvorrichtung 10 umfasst einen Luftansaugkanal 14, über den Luft zur Verbrennungskraftmaschine geleitet wird und einen Abgasrückführkanal 18, welcher orthogonal zu einer Luftansaugkanal-Mittelachse 22 in den Luftansaugkanal 14 mündet und über den Abgas in den Luftansaugkanal 14 zurückgeführt werden kann. Der Abgasrückführkanal 18 ist über eine Dichtung 26 gegen den Luftansaugkanal 14 abgedichtet.

An einer Mündung 30 am Ende des Abgasrückführkanals 18 ist ein Ventilsitz 34 ausgebildet. In dem Luftansaugkanal 14 ist ein Regelkörper 38 angeordnet, über welchen ein zurückgeführter Abgasstrom aus dem Abgasrückführkanals 18 regelbar ist. Der Regelkörper 38 ist mittels eines Aktors (nicht gezeigt) um eine orthogonal zur Luftansaugkanal-Mittelachse 22 vorgesehene Schwenkachse 42 verschwenkbar. Der Regelkörper 38 ist aus einem Schwenkarm 46, welcher mit einer Schwenkwelle 50 verbunden ist, einer Drosselklappe 54, welche einen Luftstrom im Luftansaugkanal 14 drosselt, und einem Ventilteller 58, über welchen die Mündung 30 des Abgasrückführkanals 18 verschließbar ist, gebildet. Die Drosselklappe 54 und der Ventilteller 58 sind über eine gemeinsame Schraube 62 an dem Schwenkarm 46 befestigt.

In Figur 1 ist die Regelvorrichtung 10 in einer Ruhestellung gezeigt, welche sich beispielsweise nach dem Abstellen der Verbrennungskraftmaschine einstellt. In dieser Stellung drückt eine Feder (nicht gezeigt) im Aktor den Schwenkarm 46 mit dem Ventilteller 58 in Richtung des Ventilsitzes 34, so dass der Ventilteller 58 auf dem Ventilsitz 34 aufliegt. In dieser Figur ist zu erkennen, dass der Ventilsitz 34 eine einfach gekrümmte konkave Fläche 64 ausformt, deren Krümmungsrichtung parallel zur Luftansaugkanal-Mittelachse 22 verläuft, so dass in der Ruhestellung zwischen dem Ventilteller 58 und dem Ventilsitz 34 an Seiten orthogonal zur Luftansaugkanal-Mittelachse 22 Spalte 66 ausgebildet sind. Der Ventilteller 58 liegt somit lediglich an Bereichen des Ventilsitzes 34 auf, deren radiale Richtung parallel zur Luftansaugkanal-Mittelachse 22 ist. Über die Spalte 66 kann das Kondensat in der Ruhestellung der Regelvorrichtung 10 ablaufen, so dass ein Einfrieren der Regelvorrichtung 10 vermieden wird.

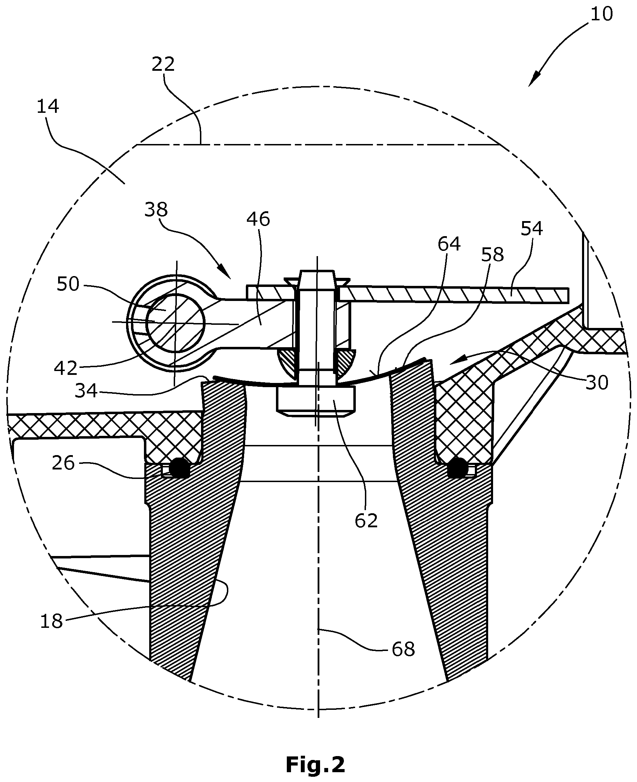

In Figur 2 ist die Regelvorrichtung 10 aus Figur 1 in einer geschlossenen Stellung gezeigt. In dieser Stellung bringt der Aktor gegen eine Federkraft des Ventiltellers 58 ein Drehmoment auf den Regelkörper 38 auf, so dass der Ventilteller 58 sich elastisch entlang einer Abgasrückführkanalachse 68 biegt und sich dichtend an die einfach gekrümmte konkave Fläche 64 des Ventilsitzes 34 anlegt.

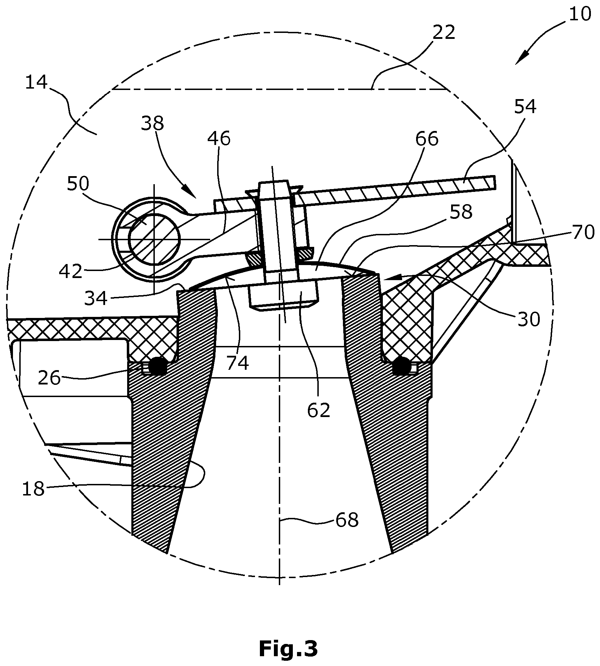

In Figur 3 ist ein zweites Ausführungsbeispiel der erfindungsgemäßen Regelvorrichtung 10 in einer Ruhestellung gezeigt. Das zweite Ausführungsbeispiel unterscheidet sich von dem ersten Ausführungsbeispiel in Figur 1 dadurch, dass der Ventilsitz 34 eine ebene Fläche 70 aufspannt, und dass der Ventilteller 58 demgegenüber eine einfach gekrümmte konkave Fläche 74 ausformt. Die Krümmungsrichtung der einfach gekrümmten konkaven Fläche 74 ist dabei parallel zur Luftansaugkanal-Mittelachse 22, so dass in der Ruhestellung zwischen dem Ventilteller 58 und dem Ventilsitz 34 an Seiten orthogonal zur Luftansaugkanal-Mittelachse 22 Spalte 66 ausgebildet sind. Der Ventilteller 58 liegt somit lediglich an Bereichen des Ventilsitzes 34 auf, deren radiale Richtung parallel zur Luftansaugkanal-Mittelachse 22 ist. Über die Spalte 66 kann das Kondensat in der Ruhestellung der Regelvorrichtung 10 ablaufen, so dass ein Einfrieren der Regelvorrichtung 10 vermieden wird.

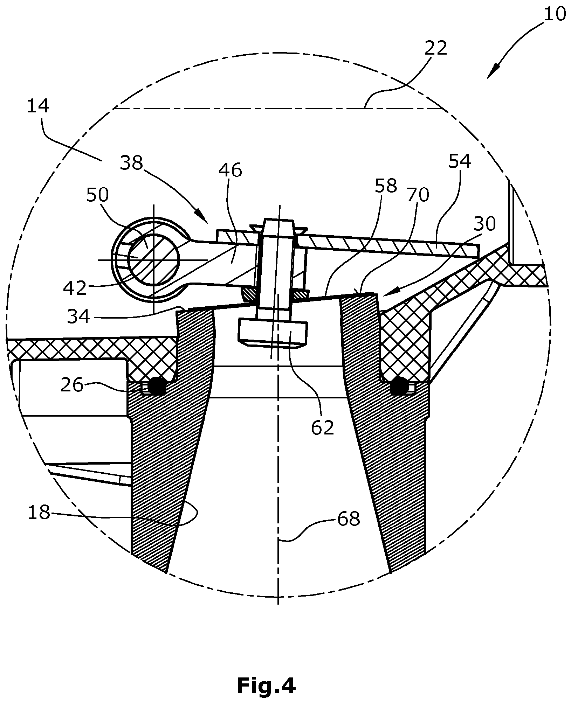

Figur 4 zeigt die Regelvorrichtung 10 aus Figur 3 in einer geschlossenen Stellung. In dieser Stellung bringt der Aktor gegen eine Federkraft des Ventiltellers 58 ein Drehmoment auf den Regelkörper 38 auf, so dass der Ventilteller 58 sich elastisch entlang der Abgasrückführkanalachse 68 biegt und sich dichtend an den ebenen Ventilsitz 34 anlegt.

Die beschriebene erfindungsgemäße Regelvorrichtung weist somit ein geringeres Risiko des Festfrierens der Regelvorrichtung auf. Zusätzlich ist eine weitere Reduktion der Abgas Emission durch eine verbesserte Regelbarkeit des Regelkörpers möglich. Schäden am Verdichter durch gefördertes flüssiges Wasser, insbesondere nach dem Neustart des Verbrennungsmotors, werden auf diese Weise zuverlässig vermieden.

Es sollte deutlich sein, dass der Schutzbereich nicht auf die beschriebenen Ausführungsbeispiele einer Regelvorrichtung beschränkt ist, sondern verschiedene Modifikationen und konstruktive Änderungen denkbar sind. Beispielsweise sind auch Ausgestaltungen denkbar, bei welchen der Ventilsitz sowie der Ventilteller eine einfach gekrümmte konkave Fläche aufweisen.

### Bezugszeichenliste

- 10: Regelvorrichtung
- 14: Luftansaugkanal
- 18: Abgasrückführkanal
- 22: Luftansaugkanal-Mittelachse
- 26: Dichtung
- 30: Mündung
- 34: Ventilsitz
- 38: Regelkörper
- 42: Schwenkachse
- 46: Schwenkarm
- 50: Schwenkwelle
- 54: Drosselklappe
- 58: Ventilteller
- 62: Schraube
- 64: einfach gekrümmte konkave Fläche
- 66: Spalt
- 68: Abgasrückführkanalachse
- 70: ebene Fläche
- 74: einfach gekrümmte konkave Fläche

## Patentansprüche

1. Regelvorrichtung (10) für eine Verbrennungskraftmaschine umfassend:
- einen Abgasrückführkanal (18),
- einen Luftansaugkanal (14), in welchen der Abgasrückführkanal (18) mündet,
- einen Ventilsitz (34), welcher an einer Mündung (30) am Ende des Abgasrückführkanals (18) ausgebildet ist, und
- einen Ventilteller (58), welcher mittels eines Aktors auf den Ventilsitz (34) auflegbar ist, so dass die Mündung (30) des Abgasrückführkanals (18) verschließbar ist,
**dadurch gekennzeichnet, dass**
der Ventilsitz (34) und/oder der Ventilteller (58) in einer Ruhestellung, in der der Aktor nicht aktiviert ist, eine zumindest einfach gekrümmte konkave Fläche (64, 74) ausformt, und dass der Ventilteller (58) elastisch ausgebildet ist.

2. Regelvorrichtung (10) nach Anspruch 1, **dadurch gekennzeichnet, dass** der Ventilsitz (34) und/oder der Ventilteller (58) zu einer parallelen Geraden der Luftansaugkanal-Mittelachse (22) konkav gekrümmt ausgebildet ist, so dass in der Ruhestellung zwischen dem Ventilteller (58) und dem Ventilsitz (34) an Seiten orthogonal zur Luftansaugkanal-Mittelachse (22) Spalte (66) ausgebildet sind.

3. Regelvorrichtung (10) nach Anspruch 1, **dadurch gekennzeichnet, dass** der Ventilsitz (34) und/oder der Ventilteller (58) zu einer Geraden, die orthogonal zur Luftansaugkanal-Mittelachse (22) verläuft, konkav gekrümmt ausgebildet ist, so dass in der Ruhestellung Spalte (66) zwischen dem Ventilteller (58) und dem Ventilsitz (34) in einer Hauptströmungsrichtung des Luftansaugkanals hintereinander liegen.

4. Regelvorrichtung (10) nach Anspruch 1, **dadurch gekennzeichnet, dass** die aufgespannte Ebene eine doppelt gekrümmte konkave Fläche ausformt.

5. Regelvorrichtung (10) nach einem der vorherigen Ansprüche, **dadurch gekennzeichnet, dass** der Ventilteller (58) in dem Luftansaugkanal (14) um eine Schwenkachse (42) verschwenkbar angeordnet ist.

6. Regelvorrichtung (10) nach einem der Ansprüche 1-4, **dadurch gekennzeichnet, dass** der Ventilteller (58) in dem Luftansaugkanal (14) entlang einer Abgasrückführkanalachse (68) beweglich angeordnet ist.

7. Regelvorrichtung (10) nach einem der vorherigen Ansprüche, **dadurch gekennzeichnet, dass** der Ventilteller (58) aus Blech gebildet ist.

8. Regelvorrichtung (10) nach einem der vorherigen Ansprüche, **dadurch gekennzeichnet, dass** die Regelvorrichtung (10) federbelastet ist, so dass der Ventilteller (58) in einer Ruhestellung der Regelvorrichtung (10), in der der Aktor nicht aktiviert ist am Ventilsitz (34) aufliegt, wobei eine Federkraft des Ventiltellers (58) derart bemessen ist, dass in dieser Stellung zwischen Ventilteller (58) und Ventilsitz (34) wenigstens ein Spalt (66) ausgeformt ist.

9. Regelvorrichtung (10) nach einem der vorherigen Ansprüche, **dadurch gekennzeichnet, dass** in einer Schließstellung der Regelvorrichtung (10) der Ventilteller (58) entgegen der Federkraft durch den Aktor dichtend auf den Ventilsitz (34) gepresst ist.

## Claims

1. Control device (10) for an internal combustion engine, comprising:
- an exhaust gas recirculation duct (18),
- an air intake duct (14) into which the exhaust gas recirculation duct (18) opens,
- a valve seat (34) which is formed at an opening (30) at the end of the exhaust gas recirculation duct (18), and
- a valve disc (58) which can be placed onto the valve seat (34) by means of an actuator, so that the opening (30) of the exhaust gas recirculation duct (18) can be closed,
**characterized in that**
the valve seat (34) and/or the valve disc (58) forms an at least singly curved concave surface (64, 74) in a rest position in which the actuator is not activated, and **in that** the valve disc (58) is of elastic design.

2. Control device (10) according to claim 1, **characterized in that** the valve seat (34) and/or the valve disc (58) is of concavely curved design with respect to a parallel straight line of the air intake duct centre axis (22), so that, in the rest position, gaps (66) are formed between the valve disc (58) and the valve seat (34) on sides orthogonal to the air intake duct centre axis (22).

3. Control device (10) according to claim 1, **characterized in that** the valve seat (34) and/or the valve disc (58) is of concavely curved design with respect to a straight line which runs orthogonally to the air intake duct centre axis (22), so that, in the rest position, gaps (66) between the valve disc (58) and the valve seat (34) lie one behind the other in a main flow direction of the air intake duct.

4. Control device (10) according to claim 1, **characterized in that** the plane spanned forms a double-curved concave surface.

5. Control device (10) according to one of the preceding claims, **characterized in that** the valve disc (58) is arranged in the air intake duct (14) so as to be pivotable about a pivot axis (42).

6. Control device (10) according to one of claims 1-4, **characterized in that** the valve disc (58) is arranged in the air intake duct (14) so as to be movable along an exhaust gas recirculation duct axis (68).

7. Control device (10) according to one of the preceding claims, **characterized in that** the valve disc (58) is formed from sheet metal.

8. Control device (10) according to one of the preceding claims, **characterized in that** the control device (10) is spring-loaded, so that the valve disc (58) rests on the valve seat (34) in a rest position of the control device (10) in which the actuator is not activated, wherein a spring force of the valve disc (58) is dimensioned such that, in this position, at least one gap (66) is formed between valve disc (58) and valve seat (34).

9. Control device (10) according to one of the preceding claims, **characterized in that**, in a closed position of the control device (10), the valve disc (58) is pressed onto the valve seat (34) in a sealing manner by the actuator against the spring force.

## Revendications

1. Arrangement de régulation (10) pour un moteur à combustion interne comprenant :
- un canal de recyclage des gaz d'échappement (18),
- un canal d'admission d'air (14) dans lequel débouche le canal de recyclage des gaz d'échappement (18),
- une valve de soupape (34) qui est réalisé au niveau d'une embouchure (30) à l'extrémité du canal de recyclage des gaz d'échappement (18), et
- une tête de soupape (58) qui peut être posée sur la valve de soupape (34) au moyen d'un actionneur, de sorte que l'embouchure (30) du canal de recyclage des gaz d'échappement (18) peut être fermée,
**caractérisé en ce que**
la valve de soupape (34) et/ou la tête de soupape (58) forme, dans une position de repos dans laquelle l'actionneur n'est pas activé, une surface concave (64, 74) au moins à courbure simple, et **en ce que** la tête de soupape (58) est réalisée de manière élastique.

2. Arrangement de régulation (10) selon la revendication 1, **caractérisé en ce que** la valve de soupape (34) et/ou la tête de soupape (58) est réalisée de manière incurvée de manière concave par rapport à une droite parallèle de l'axe médian du canal d'admission d'air (22), de sorte que, dans la position de repos, des fentes (66) sont réalisées entre la tête de soupape (58) et la valve de soupape (34) sur des côtés perpendiculaires à l'axe médian du canal d'admission d'air (22).

3. Arrangement de régulation (10) selon la revendication 1, **caractérisé en ce que** la valve de soupape (34) et/ou la tête de soupape (58) est réalisée de manière incurvée de manière concave par rapport à une droite qui s'étend perpendiculairement à l'axe médian du canal d'admission d'air (22), de sorte que, dans la position de repos, des fentes (66) se trouvent les unes derrière les autres entre la tête de soupape (58) et la valve de soupape (34) dans une direction d'écoulement principale du canal d'admission d'air.

4. Arrangement de régulation (10) selon la revendication 1, **caractérisé en ce que** le plan tendu forme une surface concave à double courbure.

5. Arrangement de régulation (10) selon l'une quelconque des revendications précédentes, **caractérisé en ce que** la tête de soupape (58) est disposée dans le canal d'admission d'air (14) de manière à pouvoir pivoter autour d'un axe de pivotement (42).

6. Arrangement de régulation (10) selon l'une quelconque des revendications 1 à 4, **caractérisé en ce que** la tête de soupape (58) est disposée de manière mobile dans le canal d'admission d'air (14) le long d'un axe de canal de recyclage des gaz d'échappement (68).

7. Arrangement de régulation (10) selon l'une quelconque des revendications précédentes, **caractérisé en ce que** la tête de soupape (58) est formée de tôle.

8. Arrangement de régulation (10) selon l'une quelconque des revendications précédentes, **caractérisé en ce que** l'arrangement de régulation (10) est sollicité par ressort, de sorte que la tête de soupape (58) repose sur la valve de soupape (34) dans une position de repos de l'arrangement de régulation (10) dans laquelle l'actionneur n'est pas activé, une force de ressort de la tête de soupape (58) étant dimensionnée de telle sorte que, dans cette position, au moins une fente (66) est formée entre la tête de soupape (58) et la valve de soupape (34).

9. Arrangement de régulation (10) selon l'une quelconque des revendications précédentes, **caractérisé en ce que**, dans une position de fermeture de l'arrangement de régulation (10), la tête de soupape (58) est pressée de manière étanche contre la force de ressort par l'actionneur sur la valve de soupape (34).
